# EUROPÄISCHE PATENTSCHRIFT

(11) **EP 2 308 121 B1**
(45) Veröffentlichungstag und Bekanntmachung des Hinweises auf die Patenterteilung: **24.04.2013**
(21) Anmeldenummer: 09779460.6
(22) Anmeldetag: 13.05.2009
(51) Int. Cl.: H01M 8/04, H01M 8/06, H01M 10/39, H01M 16/00, H01M 8/10, H01M 10/50

(54) **VERFAHREN ZUM BETRIEB EINES BRENNSTOFFZELLENSYSTEMS UND EIN BRENNSTOFFZELLENSYSTEM**
METHOD FOR OPERATING A FUEL CELL SYSTEM AND FUEL CELL SYSTEM
PROCÉDÉ DE CONDUITE D'UN SYSTÈME DE CELLULES À COMBUSTIBLE ET SYSTÈME DE CELLULES À COMBUSTIBLE

(30) Priorität: 07.07.2008 DE 102008040211
(43) Veröffentlichungstag der Anmeldung: 13.04.2011
(73) Patentinhaber: Robert Bosch GmbH, 70442 Stuttgart (DE)
(72) Erfinder: WAHL, Florian, 97816 Lohr (DE); KOENIGSMANN, Martin Holger, 70193 Stuttgart (DE)
(86) Internationale Anmeldenummer: PCT/EP2009/055771
(87) Internationale Veröffentlichungsnummer: WO 2010/003719

(56) Entgegenhaltungen:
- DE-A1- 10 317 123
- DE-A1-102004 012 477
- US-A1- 2007 042 244
- US-A1- 2007 128 485
- US-A1- 2008 079 386

## Beschreibung

Die Erfindung betrifft ein Verfahren zum Betrieb eines Brennstoffzellensystems gemäß des Oberbegriff des Anspruches 1 mit wenigstens einer Brennstoffzelle, einem Speichergefäß und einer Batterie, wobei in dem Speichergefäß ein Brennstoff für die Brennstoffzelle gespeichert wird. Weiterhin betrifft die Erfindung ein Brennstoffzellensystem gemäß dem Oberbegriff des Anspruches 5 mit wenigstens einer Brennstoffzelle, einem Speichergefäß und einer Batterie, wobei in dem Speichergefäß ein Brennstoff für die Brennstoffzelle speicherbar ist.

### Stand der Technik

Aus der europäischen Offenlegungsschrift EP 1454 826 A1 ist ein Antrieb für ein Unterseeboot bekannt. Bei diesem Antrieb wird eine Brennstoffzelle verwendet, welche aus einem Metallhydridwasserstoffspeicher mit Brennstoff versorgt wird. Die Abwärme der Brennstoffzelle wird dabei genutzt, um den Brennstoff aus dem Metallhydridwasserstoffspeicher zu lösen. Als nachteilig hat sich bei diesem Brennstoffzellensystem der kostenintensive und aufwendige Wärmetransport von der Brennstoffzelle zu dem Metallhydridwasserstoffspeicher herausgestellt. Da häufig der Wasserstoffspeicher und die Brennstoffzelle nicht in direkter Nähe angeordnet sind, bedarf es eines umständlichen und fehleranfälligen Wärmetransports. Darüber hinaus können Niedertemperaturbrennstoffzellen bei dieser Art von Brennstoffzellensystemen nicht genutzt werden, da die erreichte Abwärme nicht für das Auslösen des Wasserstoffs aus dem Metallhydridwasserstoffspeicher ausreicht. Weiterhin ist aus der US 2008/079386 A1 ein Energiebereitstellungssystem für elektrische Bauteile bekannt, welches eine Brennstoffzelle beinhaltet, die elektrischen Strom liefert, der durch den Verbrauch von Brennstoff erzeugt wird, einen Brennstoffspeicherbereich, der den Brennstoff speichert und den Brennstoff an die Brennstoffzelle liefert, einen Behälter, der die Brennstoffzelle und den Brennstoffspeicherbereich enthält und ein Gehäuse, welches den Behälter umgibt.

Darüber hinaus sind aus der US 2007/042244 A1 Hybrid-Systeme und Verfahren zum Steuern des Wasserstoffsystemdrucks und zum permanenten Liefern von elektrischem Strom während der Inbetriebnahme in elektrischen Energiesystemen bekannt.

### Aufgabe und Vorteile der Erfindung

Ausgehend von dem zuvor aufgeführten Stand der Technik ist es eine Aufgabe der vorliegenden Erfindung, ein Brennstoffzellensystem sowie ein Verfahren zum Betrieb eines Brennstoffzellensystems zu schaffen, welches einen preiswerteren und sicheren Betrieb ermöglicht.

Die vorstehende und weitere Aufgaben werden gelöst durch ein erfindungsgemäßes Verfahren gemäß Anspruch 1 und ein erfindungsgemäßes Brennstoffzellensystem gemäß Anspruch 5. Vorteilhafte Weiterbildungen der Erfindung sind in den abhängigen Ansprüchen angegeben. Merkmale und Details, die im Zusammenhang mit dem erfindungsgemäßen Verfahren beschrieben sind, gelten dabei selbstverständlich auch im Zusammenhang mit dem erfindungsgemäßen Brennstoffzellensystem und jeweils umgekehrt. Dabei können die in den Ansprüchen und in der Beschreibung erwähnten Merkmale jeweils einzeln für sich oder in beliebiger Kombination erfindungswesentlich sein.

Das erfindungsgemäße Verfahren zum Betrieb eines Brennstoffzellensystems schließt die technische Lehre ein, dass eine Abwärme der Batterie zur Erwärmung zumindest eines Bereiches des Speichergefäßes vorgesehen ist.

Der Kern des erfindungsgemäßen Verfahrens sowie des erfindungsgemäßen Brennstoffzellensystems besteht darin, die Abwärme der Batterie zur Erwärmung des Speichergefäßes zu nutzen. Im Gegensatz zu dem oben beschriebenen Stand der Technik kann die Batterie in der Nähe des Speichergefäßes angeordnet werden, so dass die Abwärme einfach und unkompliziert in den Bereich des Speichergefäßes gelangen kann. Zusätzlich ist es möglich, Niedertemperaturbrennstoffzellen zu nutzen, da die Abwärme der Brennstoffzelle nicht mehr benötigt wird um das Speichergefäß zu erwärmen. Vorteilhafterweise handelt es sich bei der Batterie um eine Hochtemperaturbatterie. Diese weisen Arbeitstemperaturen zwischen 250 und 400°C auf und zeichnen sich durch eine sehr hohe Energiedichte zwischen 100 bis 180 Wh/kg aus. Durch die Nutzung einer Hochtemperaturbatterie in dem erfindungsgemäßen Brennstoffzellensystem würden nicht nur die oben genannten Nachteile überwunden, sondern es bestände auch die Möglichkeit hohe Energiemengen in dem Brennstoffzellensystem zu speichern und bei Bedarf abzurufen.

Als Hochtemperaturbatterien werden im Rahmen der Erfindung Batterietypen bezeichnet, die aus technischen Gründen mit hohen Temperaturen betrieben werden müssen, weil zum Beispiel Elektrolyte auf Basis von Salzschmelzen verwendet werden. So können zum Beispiel folgende Hochtemperaturbatterietypen zum Einsatz kommen und/oder die Hochtemperaturbatterie eine der folgenden Substanzen nutzen: Na/S oder Na/Ni(Fe)Cl₂.

Eine vorteilhafte Ausführungsvariante des erfindungsgemäßen Verfahrens zeichnet sich dadurch aus, dass der Brennstoff in dem Speichergefäß mittels eines Adsorptionselementes gespeichert wird, wobei der Brennstoff in dem Adsorptionselement reversibel adsorbiert wird. Als Adsorption bezeichnet man die Anlagerung der Atome oder Moleküle von Flüssigkeiten oder Gasen an eine feste Oberfläche. Das Gegenteil der Adsorption, die Abgabe eines adsorbierten Stoffs, wird Desorption genannt. Bei der Anlagerung des Brennstoffes im Rahmen der Adsorption wird Bindungsenergie freigesetzt. Im Rahmen der Desorption muss diese Bindungsenergie wieder zum Freisetzen des Adsorbats aufgebracht werden. In der Oberflächenchemie und Oberflächenphysik unterscheidet man als Arten der Adsorption hauptsächlich zwischen der Physisorption und der Chemisorption. Dabei beschreibt die Physisorption alle Adsorptionen, die zu keiner Veränderung der chemischen Struktur des Adsorbats führen. Es treten im Rahmen der Bindung in der Regel nur van der Waal'sche Kräfte auf. Die Bindungen innerhalb des adsorbierten Brennstoffs werden dabei nicht gebrochen sondern ggf. polarisiert. Bei der Chemisorption wird die elektronische Struktur des Adsorptivs bei der Anlagerung verändert, sodass Bindungen innerhalb des Adsorbats im Gegensatz zur Physisorption gebrochen werden können und somit der Zerfall des Adsorbats möglich, aber nicht zwingend ist. Moderne Brennstoffzellen benutzen als Brennstoff häufig Wasserstoff, weshalb im Folgenden mehrfach auf diesen Bezug genommen werden soll. Bekannt sind allerdings auch andere Brennstoffe, so dass Wasserstoff nicht als eine abschließende Aufzählung, sondern vielmehr als eine beispielhafte Variante für einen Brennstoff angesehen werden soll. Bei der Speicherung von gasförmigen Wasserstoff in dem Adsorptionselement erfolg die Anlagerung des Wasserstoffes im Allgemeinen an metallische Legierungen. Dieses Speicherverfahren erlaubt eine weitestgehend verlustfreie Speicherung über die Zeit. Die Freisetzung des Brennstoffes ist ein endothermer Prozess, weshalb die Abwärme der Batterie genutzt werden kann. In einer weiteren vorteilhaften Ausführungsvariante ist folglich vorgesehen, dass das Adsorptionselement durch die Abwärme erwärmt wird und der Brennstoff aus dem Adsorptionselement reversibel desorbiert wird. Je nach Bedarf kann jederzeit wieder Brennstoff in das Adsorptionselement eingeführt und dort adsorbiert werden.

Um die Desorption des Brennstoffes aus dem Adsorptionselement zu steuern hat es sich als vorteilhaft erwiesen, dass mittels eines Steuermittels ein Zufluss der Abwärme an das Speichergefäß gesteuert wird. So kann das Steuermittel in Abhängigkeit von einer Temperatur des Speichergefäßes den Zufluss der Abwärme regulieren. Da zumindest ein Bereich des Speichergefäßes von der Abwärme erwärmt wird, kann das Steuermittel mehrere Temperaturen des Speichergefäßes ermitteln um so Temperaturgradienten zu ermitteln und darüber den Zufluss der Abwärme zu steuern.

Die oben genannten Nachteile werden ebenfalls durch ein Brennstoffzellensystem gelöst, welches die technische Lehre aufweist, dass ein Wärmemittel vorgesehen ist, wobei das Wärmemittel eine Abwärme der Batterie derart leitet, dass zumindest ein Bereich des Speichergefäßes erwärmbar ist. Auch hier ist erfindungsgemäß vorgesehen, dass das Wärmemittel dazu dient, die Abwärme der Batterie derart zu leiten, dass diese das Speichergefäß zumindest punktuell erwärmt. So bedarf es nicht mehr der Abwärme der Brennstoffzelle um für eine punktuelle oder vollständige Aufheizung des Speichergefäßes zu sorgen.

Eine weitere vorteilhafte Ausgestaltung des erfindungsgemäßen Brennstoffzellensystems zeichnet sich dadurch aus, dass in dem Speichergefäß ein Adsorptionselement angeordnet ist. Das Adsorptionselement kann z.B. Wasserstoff als Brennstoff durch Adsorption speichern. Als Adsorptionselement kann insbesondere ein Metallhydridspeicher Verwendung finden. Somit weist die Erfindung den Vorteil auf, dass eine energetisch optimierte Verwendung von Adsorptionselementen, insbesondere einem Metallhydridspeicher stattfindet, bei denen die Desorption des Wasserstoffes mittels der Abwärme der Batterie erfolgt. Somit steht der Brennstoff einer Verwendung in der Brennstoffzelle zur Verfügung. Der beschriebene Aufbau bietet sich insbesondere für Anwendungen in Kraftfahrzeugen als auch in der portablen oder stationären Energieversorgung an. Mögliche Metallhydridspeicher sind beispielsweise: NaBH₄, MgH₂ oder NaAlH₄.

In einer Ausführungsvariante des erfindungsgemäßen Speichergefäßes hat es sich als vorteilhaft herausgestellt, wenn das Adsorptionselement wenigstens einen der folgenden Stoffe aufweist: einen Kohlenstoff, insbesondere einen amorphen Kohlenstoff, ein Metal-Organic Framework (MOF) oder ein Element der Gruppe der Zeolithe. Jeder der aufgeführten Stoffe weist eine sehr große Oberfläche auf, die es ihm ermöglicht, eine entsprechende Menge an Brennstoff zu adsorbieren. Darüber hinaus lassen sich die genannten Stoffe preiswert herstellen, damit ein kostengünstiger Speichergefäß erzielt wird.

Ebenfalls vorteilhaft ist es, wenn das Adsorptionselement aus einer Mehrzahl von Adsorptionsmitteln besteht, wobei jedes Adsorptionsmittel schüttgutartig ausgeformt ist. Der Vorteil dieser Ausführungsvariante besteht darin, dass der in den Speichergefäß eingeführte Brennstoff sich nicht mittels Diffusion und/oder Konvektion in dem Adsorptionselement ausbreiten muss. Vielmehr ermöglichen Hohlräume zwischen dem schüttgutartig ausgeführten Adsorptionsmittel einen Fluss des Brennstoffes in dem Speichergefäß. Dadurch das nicht ein einzelner monolithischer Körper als Adsorptionselement Verwendung findet sondern eine Mehrzahl von Adsorptionsmitteln wird die Gesamtoberfläche, welche den Brennstoff adsorbiert nur geringfügig reduziert. Da der Brennstoff ohne großen Widerstand in das Adsorptionselement ein- und ausströmen kann ermöglicht diese Ausführungsvariante ein schnelles Be- und Entladen des Speicherbehälters. Als besonders vorteilhaft hat es sich dabei herausgestellt, wenn das Adsorptionsmittel tablettenförmig und/oder fadenförmig ausgestaltet ist. Tablettenförmig ausgestaltete Adsorptionsmittel lassen sich besonders leicht in das Speichergefäß hineinfüllen und resultieren in einem guten Verhältnis von adsorbierender Oberfläche und Strömungskanälen zwischen den Adsorptionsmitteln für den Brennstoff.

Das erfindungsgemäße Brennstoffzellensystem zeichnet sich dadurch aus, dass wenigstens eine Brennstoffzelle Verwendung findet. Es ist aber auch denkbar, dass eine Mehrzahl von Brennstoffzellen in Serie geschaltet werden um so eine erhöhte Ausgangsleistung zu erzielen. Um ausreichende Menge an Brennstoff für diese Mehrzahl von Brennstoffzellen bereitzustellen hat es sich als vorteilhaft erwiesen, wenn das Adsorptionselement auf Basis von Metallhydriden den gasförmigen Wasserstoff einspeichert. Mögliche Metallhydride, die dabei zum Einsatz kommen können sind: NaBH₄, MgH₂ oder NaAlH₄. Mögliche alternativ Speichersysteme, die in dem Adsorptionselement Verwendung finden sind Metallsalze, in denen NH₃ gespeichert werden kann. Diese Bildung von Metallsalzkomplexen ist beispielhaft möglich in: MgCl₂ (Mg(NH₃)₆Cl₂) oder CaCl₂ (Ca(NH₃)₈Cl₂). Durch Erwärmung kann gasförmiger Ammoniak desorbiert werden, der katalytisch zu Wasserstoff umgesetzt werden kann. In einer bevorzugten Ausführungsform wird dabei der Katalysator direkt in das Speichermaterial des Adsorptionselementes mit eingebracht. Als ein Katalysator eignet sich beispielhaft Ruthenium.

Eine alternative Ausführungsvariante des erfindungsgemäßen Brennstoffzellensystems weist als Speichergefäß einen Drucktank auf. In einem Drucktank wird der Brennstoff in flüssiger Form gespeichert. Dieses ermöglicht die Speicherung einer sehr großen Menge von Wasserstoff bei sehr niedrigen Temperaturen (>20K). Dieser flüssige Brennstoff wird aus dem Speichergefäß mittels eines Ventilmittels entnommen. Dabei steuert das Ventilmittel einen Fluss des Brennstoffes. Da durch das Ausströmen des sehr kalten Wasserstoffes eine weitere Abkühlung des Ventilmittels auftreten kann, die einhergeht mit einer möglichen Materialbeschädigung, hat es sich als vorteilhaft erwiesen, wenn der erwärmte Bereich des Speichergefäßes das Ventilmittel ist. Durch die Übertragung der Abwärme der Batterie auf das Ventilmittel ist sichergestellt, dass dieses nicht so stark abkühlt, das Materialschäden auftreten können.

Eine weitere vorteilhafte Ausgestaltung zeichnet sich dadurch aus, dass die Batterie innerhalb des Speichergefäßes angeordnet ist. Somit wird die Abwärme der Batterie direkt in den zu erwärmenden Bereich des Speichergefäßes geleitet. Dabei kann die Batterie mittig innerhalb des Speichergefäßes angeordnet sein. So ist eine optimale Abgabe der Wärmemenge an das Speichergefäß sichergestellt. Alternativ kann die Batterie auch an einer Außenseite des Speichergefäßes angeordnet sein.

Erfindungsgemäß ist vorgesehen, dass ein Wärmemittel die Abwärme der Batterie derart leitet, dass zumindest ein Bereich des Speichergefäßes erwärmt wird. Erfindungsgemäß ist weiterhin vorgesehen, dass das Wärmemittel wenigstens eines der folgenden ist: ein Wärmeleitblech, eine Wärmestrahlung, eine Rohrelement oder ein flüssiger Wärmeträger, insbesondere dass das Wärmemittel eine flüssige Wärmeträgersubstanz ist, die insbesondere auch bei Temperaturen unterhalb von 50°C flüssig vorliegt, wie insbesondere Silikonöle. Je nach Ausgestaltung und Anordnung der Batterie innerhalb des Brennstoffzellensystems würde sich eines der aufgeführten Wärmemittel anbieten.

Eine weitere vorteilhafte Ausgestaltung der aufgeführten Wärmemittel zeichnet sich dadurch aus, dass die flüssige Wärmeträgersubstanz in einem Wärmeträgerkreislauf fließt, wobei der Wärmeträgerkreislauf in und/oder an dem zu erwärmenden Bereich des Speichergefäßes angeordnet ist. Die Abwärme der Batterie fließt folglich in die Wärmeträgersubstanz, welche dann in dem Wärmeträgerkreislauf zirkulieren kann. Dieser Wärmeträgerkreislauf ist erfindungsgemäß mit zumindest einem Bereich des Speichergefäßes verbunden. Somit wird die Abwärme der Batterie in die Wärmeträgersubstanz überführt und von dort aus auf den Bereich des Speichergefäßes transportiert. Die Wärmeträgersubstanz wird dabei vorteilhafterweise außen an einer Hülle des Speichergefäßes vorbeigeführt. Zusätzlich kann die Wärmeträgersubstanz durch entsprechende Rohrleitungen innerhalb des Ventilmittels fließen, um dieses zu erwärmen. Dabei sind die Wärme übertragenden Flächen innerhalb des Ventilmittels und/oder des Speichergefäßes mit Rippen oder ähnlichen, den Wärmeübergang verbessernden konstruktiven Maßnahmen versehen.

Insbesondere hat es sich als vorteilhaft herausgestellt, wenn das Speichergefäß doppelwandig ist und zumindest ein Teil des Wärmeträgerkreislaufs zwischen den Wänden des Speichergefäßes angeordnet ist. So strömt im Bereich zwischen den beiden Wänden des Speichergefäßes die Wärmeträgersubstanz. Damit ist ein besonderer einfacher konstruktiver Aufbau des Wärmeträgerkreislaufes möglich.

Eine weitere vorteilhafte Ausgestaltung des erfindungsgemäßen Brennstoffzellensystems zeichnet sich dadurch aus, dass zumindest ein Teil des Wärmeträgerkreislaufes innerhalb des Adsorptionselementes verläuft. In einer weiteren Ausführungsvariante des erfindungsgemäßen Speicherbehälters weist das Speichergefäß mindestens eine Querverbindung auf, wobei die Querverbindung das Speichergefäß mechanisch stabilisiert. Aufgrund von räumlichen Randbedingungen weist das Speichergefäß häufig eine zylinderartige Form auf. Damit die mechanische Integrität des Speichergefäßes trotz Aufnahme des Adsorptionselementes sichergestellt ist, hat sich die Verwendung der Querverbindungen als vorteilhaft erwiesen. Zusätzlich kann die Querverbindung dazu dienen, eine homogene Temperaturverteilung innerhalb des Speichergefäßes bzw. des Adsorptionselementes sicherzustellen. Innerhalb dieser Querverbindung kann ein Teil des Wärmeträgerkreislaufes verlaufen.

Ebenfalls zum Ausgleich von Temperaturgradienten kann in das Speichergefäß wenigstens ein Wärmeleitblech integriert werden. Das Wärmeleitblech ragt in das Speichergefäß hinein und bildet eine Oberfläche entlang derer sich Temperaturgradienten ausgleichen können. Vorteilhafterweise besteht das Wärmeleitblech aus einem Material mit einem hohen Wärmeleitkoeffizienten.

Um eine gleichmäßige Verteilung der Wärmeträgersubstanz innerhalb des Wärmeträgerkreislaufes zu erreichen hat es sich als vorteilhaft erwiesen, wenn der Wänneträgerkreislauf eine Pumpe aufweist. Diese kann für eine Förderung des Wärmeträgermediums von der Batterie zum Speichergefäß bzw. in umgekehrter Richtung sorgen. Zusätzlich kann der Wärmeträgerkreislauf einen Wärmetauscher aufweisen. Über diesen kann eine Temperierung der Wärmeträgersubstanz innerhalb des Wärmeträgerkreislaufes erfolgen. Der Wärmetauscher kann beispielsweise durch eine Außenluft gekühlt werden.

Eine weitere vorteilhafte Ausgestaltung des Speicherbehälters zeichnet sich dadurch aus, dass der Wärmeträgerkreislauf eine Regeleinheit zur Regulierung der Wärmemenge aufweist. Dazu kann die Regeleinheit mit dem Detektor, welcher die Betriebsparameter überwacht, verbunden sein. Vorteilhafterweise handelt es sich bei der Regeleinheit um einen integrierten Schaltkreis, wie etwa einen Chip, einen FPGA (Field Programmable Gate Array) oder einen Microcontroller. Dieser Art integrierte Schaltkreise können mit Computerprogrammen versehen werden und über Schnittstellen mit externen Detektoren kommunizieren. Dadurch ist eine zentrale Überwachung der Betriebsparameter des Wärmeträgerkreislaufes durch die Regeleinheit sichergestellt. Wird das Speichergefäß in ein Kraftfahrzeug integriert, kann die Regeleinheit durch ein Bussystem, insbesondere einen CAN-Bus, mit einer zentralen Fahrzeugsteuerung verbunden sein.

Es hat sich ebenfalls als vorteilhaft herausgestellt, wenn das Brennstoffzellensystem in einer der oben beschriebenen Ausführungsvarianten nach einem der ebenfalls oben beschriebenen Verfahren betreibbar ist.

### Ausführungsbeispiele

Weitere die Erfindung verbessernde Maßnahmen sind in den Unteransprüchen angegeben oder ergeben sich aus der nachfolgenden Beschreibung mehrerer Ausführungsbeispiel der Erfindung, welche in den Figuren schematisch dargestellt sind. Sämtliche aus den Ansprüchen, der Beschreibung oder der Zeichnung hervorgehende Merkmale und/oder Vorteile, einschließlich konstruktiver Einzelheiten, räumliche Anordnungen und Verfahrensschritte, können sowohl für sich als auch in den verschiedensten Kombinationen erfindungswesentlich sein. Die Figuren zeigen:
- Fig. 1: ein Brennstoffzellensystem mit zwei Brennstoffzellen,
- Fig. 2: ein erfindungsgemäßes Brennstoffzellensystem mit einer Batterie sowie einem Speichergefäß,
- Fig. 3: eine zweite Ausführungsvariante des erfindungsgemäßen Brennstoffzellensystems und
- Fig. 4: ein weiteres erfindungsgemäßes Ausführungsbeispiel für das erfindungsgemäße Brennstoffzellensystem.

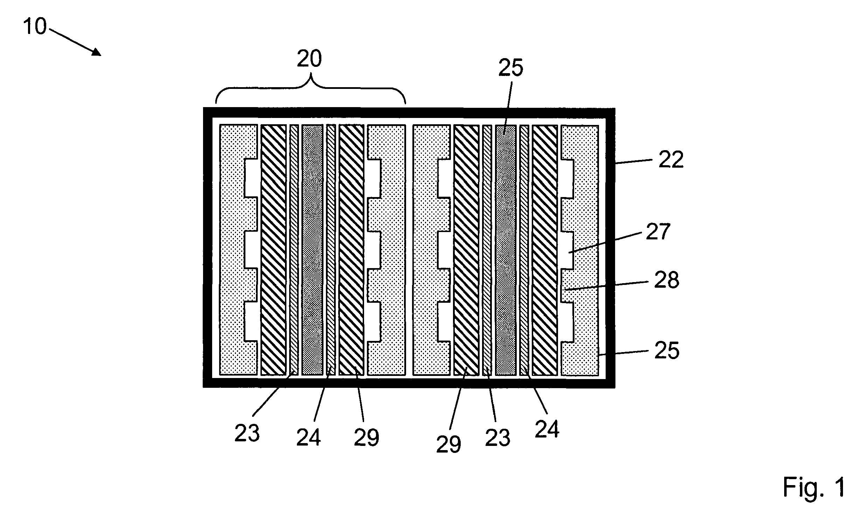

In Figur 1 ist das erfindungsgemäße Brennstoffzellensystem 10 dargestellt, welches hier zwei Brennstoffzellen 20 aufweist. Diese Brennstoffzellen 20 sind angrenzend zueinander in einem Gehäuse 22 angeordnet sind. Jede der Brennstoffzellen 20 weist zwei Elektrodenelemente 23,24 auf. Durch eine Beaufschlagung der Elektrodenelemente 23,24 mit zwei unterschiedlichen Brennstoffen wird durch eine elektrochemische Reaktion ein elektrischer Strom erzeugt. Die beiden Brennstoffe werden häufig in Form verschiedener Fluide bereitgestellt. Ein Beispiel für die zwei korrespondierenden Elektrodenreaktionen sind die folgenden:

| | | |
|---|---|---|
| H₂ | => 2H⁺ + 2e⁻ | (Anodenreaktion) |
| 2H⁺ + 2e⁻ + ½ O₂ | => H₂0 | (Kathodenreaktion). |

Der gewonnene elektrische Strom kann in einem Lastelement verbraucht werden. Der Reaktand Sauerstoff kann in Form von Umgebungsluft der Brennstoffzelle zugeführt werden. Um eine gleichmäßige Verteilung der Reaktanden auf den Elektrodenelementen 10 zu erreichen, weist wenigstens eine der Brennstoffzellen 20 eine Strömungsfeldplatte 26 auf.

Die Brennstoffzelle 20 weist eine Strömungsfeldplatte 26 auf, welche dient dazu, die Reaktanden über die aktive Fläche der Elektrodenelemente 23,24 zu verteilen und dabei für eine mechanische Stabilität zu sorgen. Um dieses zu ermöglichen, weist die Strömungsfeldplatte 26 in der dargestellten Ausführungsvariante Strömungskanäle 27 auf. Die beiden Strömungskanäle 27 verlaufen mäanderförmig über eine Außenfläche der Strömungsfeldplatte 26. Begrenzt wird der Strömungskanal 27 durch einen Steg 28. Der an einem Elektrodenelement 23,24 - der Anode - zugeführte Wasserstoff spaltet sich unter Abgabe von Elektronen in H⁺-Ionen auf. Während die Elektronen über einen externen Stromkreislauf zur Energiegewinnung genutzt werden können, diffundieren die Protonen durch ein Membranelement 25 zur zweiten Elektrodenelement - der Kathode. An der Kathode kann im Anschluss eine Reaktion der Protonen mit Sauerstoff geschehen, so dass als Ergebnis Wasser entsteht. Dabei bilden die Elektrodenelemente 23,24 mit dem Membranelement 25 eine Membran-Elektroden-Einheit (MEA - Membrane Electrode Assembly). Zwischen der Membran-Elektroden-Einheit und der Strömungsfeldplatte 26 ist je eine Gasdiffusionsschicht 29 aufgebaut. Diese Gasdiffusionsschicht hat die Funktion, die Brennstoffe Wasserstoff oder Sauerstoff gleichmäßig über die gesamte Fläche der Elektroden zu verteilen und die Reaktionsprodukte Strom, Wärme und Wasser von den Elektroden abzuführen.

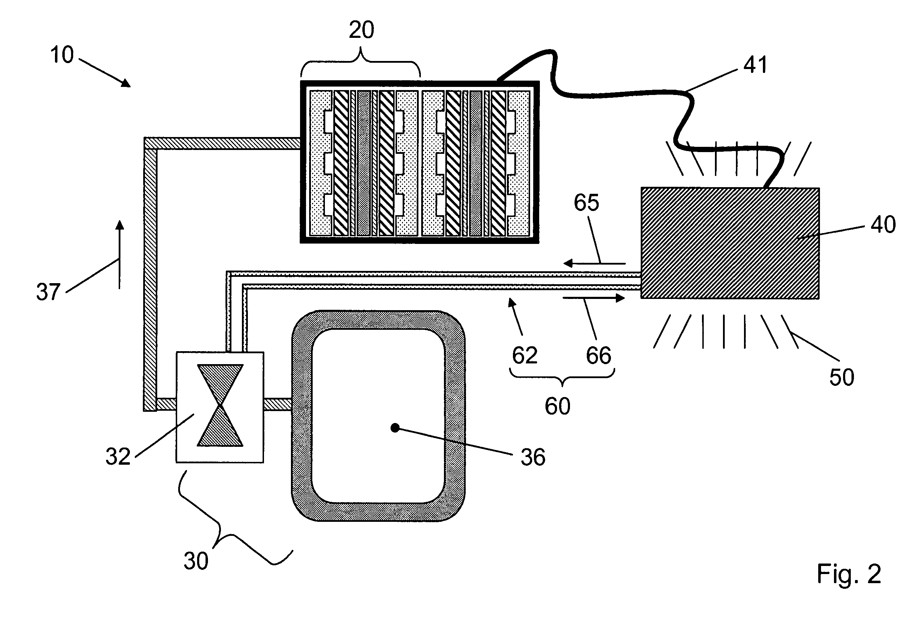

In Figur 2 ist das erfindungsgemäße Brennstoffzellensystem 10 dargestellt. Zwei Brennstoffzellen 20 sorgen zur elektrochemischen Umsetzung zweier Brennstoffe in elektrische Energie. Über eine elektrische Verbindung 41 wird diese elektrische Energie in eine Batterie 40 eingespeist. Bei der Batterie 40 handelt es sich vorteilhafterweise um eine Hochtemperaturbatterie, die eine sehr hohe Energiedichte aufweist. Die Arbeitstemperatur solcher Hochtemperaturbatterien liegt im Bereich zwischen 250 und 400°C. Die Brennstoffzellen 20 werden aus dem Speichergefäß 30 mit einem Brennstoff versorgt. Dabei kann es sich um Wasserstoff handeln. Dieser Wasserstoff fließt dabei durch eine Rohrverbindung in Richtung des Bewegungspfeiles 37 in die Brennstoffzellen 20 ein, um dort elektrochemisch zu reagieren. In Figur 2 ist das Speichergefäß 30 als ein Drucktank dargestellt. Innerhalb des Drucktankes liegt der Brennstoff 36 im Allgemeinen in flüssiger Form vor. Handelt es sich bei dem Brennstoff 36 um Wasserstoff, ist somit das Speichergefäß 30 auf eine Temperatur unterhalb von (20K) abgekühlt. Der Wasserstofffluss 37 kann mittels des Ventilmittels 32 gesteuert werden. Bei dem Ausfluss des Brennstoffes aus dem Ventilmittel 32 findet eine Expansion und damit einhergehend eine Abkühlung des Ventilmittels 32 statt. Durch die weitere Abkühlung des Ventilmittels können Materialschäden auftreten. Um diese zu verhindern, ist erfindungsgemäß ein Wärmemittel 60 vorgesehen, wobei das Wärmemittel 60 eine Abwärme 50 der Batterie 40 derart leitet, dass zumindest ein Bereich des Speichergefäßes 30 - hier das Ventilmittel 32 - erwärmbar ist. In dem dargestellten Ausführungsbeispiel handelt es sich bei dem Wärmemittel 60 um eine flüssige Wärmeträgersubstanz, die innerhalb eines Wärmeträgerkreislaufes 62 fließt. Der von der Hochtemperaturbatterie 40 erwärmte flüssige Wärmeträger fließt in Richtung auf das Ventilmittel 32 durch ein rohrartig ausgestaltetes Element des Wärmeträgerkreislaufes 62 in Richtung des Bewegungspfeiles 65. Innerhalb des Ventilmittels 32 sind vorteilhafterweise Rohrleitungen vorgesehen, durch welche das Wärmemittel 60 fließt, um für eine Erwärmung des Ventilmittels 32 zu sorgen. Für einen guten Übergang der Abwärme aus dem Wärmemittel 60 in das Ventilmittel 32 können innerhalb des Wärmeträgerkreislaufes 62 entsprechende Wärmeleitbleche vorgesehen sein. Nach der Übertragung der Abwärme an das Ventilmittel 32 fließt das Wärmemittel 60 gemäß des Bewegungspfeiles 66 zurück in die Hochtemperaturbatterie 40 um dort erneut erwärmt zu werden.

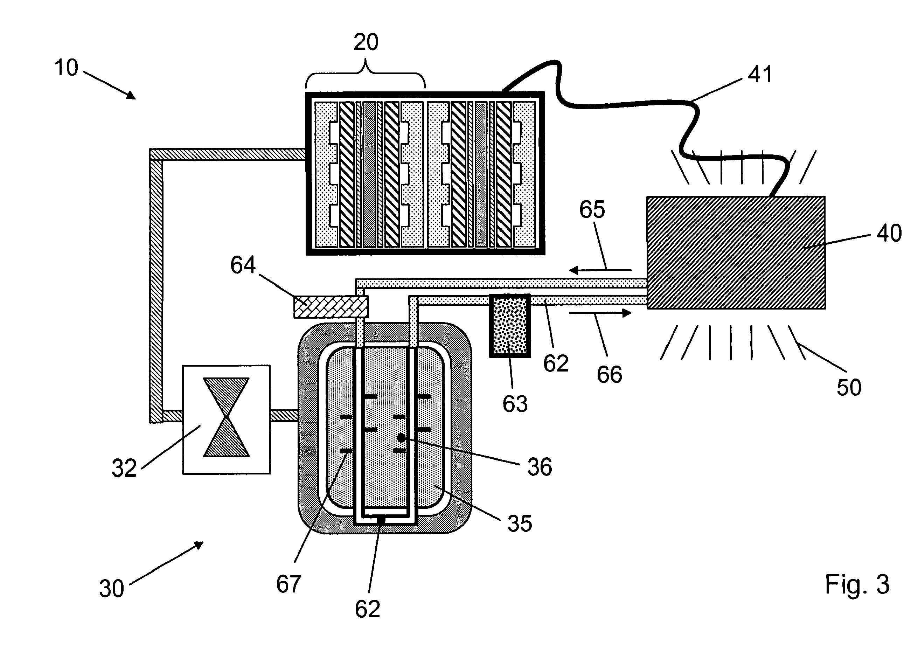

In Figur 3 ist eine weitere Ausführungsvariante des erfindungsgemäßen Brennstoffzellensystems 10 dargestellt. Auch hier wird ein Brennstoff 36 für die Brennstoffzelle 20 in einem Speichergefäß gespeichert. Erfindungsgemäß ist vorgesehen, dass die Abwärme 50 der Batterie 40 zur Erwärmung mindestens eines Bereiches des Speichergefäßes vorgesehen ist. Im Gegensatz zur Figur 2 weist das Speichergefäß 30 des in Figur 3 gezeigten Brennstoffzellensystems 10 ein Adsorptionselement 35 auf. Dieses Adsorptionselement 35 dient dazu den Brennstoff 36 zu speichern. Dieses geschieht durch reversible Adsorption des Brennstoffes in dem Adsoptionselement 35. Bei der Adsorption handelt es sich um einen exothermen Prozess, in dessen Verlauf der Brennstoff an den Bestandteilen des Adsorptionselementes abgelagert wird. Insbesondere handelt es sich bei dem Adsorptionselement um ein Gefäß, welches Metallhydridspeicher aufweist. Um den Brennstoff aus dem Adsorptionselement zu lösen, wird dieses durch die Abwärme 50 erwärmt. Dadurch wird der Brennstoff 36 reversibel desorbiert und kann durch das Ventilmittel 32 gesteuert in die Brennstoffzelle 20 einfließen. In dem dargestellten Ausführungsbeispiel handelt es sich bei den erwärmten Bereichen des Speichergefäßes um das Adsorptionselement 35. Folglich dient die Batterie 40 dazu, den Brennstoff aus dem Adsorptionselement zu desorbieren. Erfindungsgemäß ist dazu vorgesehen, dass ein flüssiger Wärmeträger die Abwärme 50 der Batterie 40 aufnimmt und diese durch einen Wärmeträgerkreislauf 62 in das Innere des Adsorptionselementes 35 speist. Wie dargestellt weist dazu das Adsorptionselement 35 ein Rohrsystem auf, was Teil des Wärmeträgerkreislaufes 62 ist und im Inneren des Adsorptionselementes 35 verläuft. An dieses Rohrsystem sind Wänneleitmittel 67 angebracht, um einen besseren Übergang der Abwärme aus dem flüssigen Wärmeträger in das Adsorptionselement 35 zu ermöglichen. Eine Pumpe 63 sorgt für die Umsetzung des flüssigen Wänneträgers innerhalb des Wärmeträgerkreistaufes 62. Um den als Wärmemittel 60 fungierenden flüssigen Wärmeträger bei Bedarfsfall zu temperieren ist in dem Wärmeträgerkreislauf 62 ein Wärmetauscher 64 integriert.

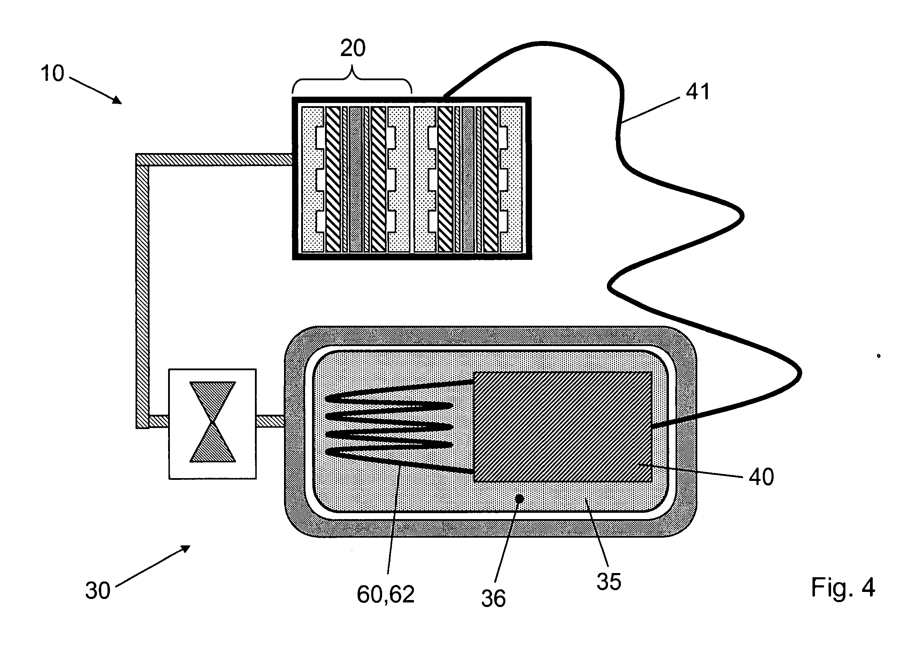

In einer alternativen Ausführungsvariante des Brennstoffzellensystems 10, wie sie in Figur 4 dargestellt ist, ist die Batterie 40 innerhalb des Speichergefäßes 30 angeordnet. Umschlossen wird die Batterie 40 von dem Adsorptionselement 35. Diese Anordnung hat den Vorteil, dass Wärmeverluste vermindert und der Systemaufwand minimiert werden können. Die Abwärme der Batterie 40 kann entweder durch die Seitenflächen direkt in das Adsorptionselement 35 eintreten oder durch einen Wärmeträgerkreislauf 62 innerhalb des Adsorptionselementes 35 eingebracht werden. Alternativ zu dem dargestellten Ausführungsbeispiel ist es auch möglich, dass die Batterie 40 partiell in eine der Seitenwände des Speichergefäßes 30 integriert ist. So kann bei einem möglichen Defektfall von außen auf die Batterie 40 zugegriffen werden.

## Patentansprüche

1. Verfahren zum Betrieb eines Brennstoffzellensystems (10), mit wenigstens einer Brennstoffzelle (20), einem Speichergefäß (30) und einer Batterie (40), wobei in dem Speichergefäß (30) ein Brennstoff (36) für die Brennstoffzelle (20) gespeichert wird, **dadurch gekennzeichnet, dass** eine Abwärme (50) der Batterie (40) zur Erwärmung zumindest eines Bereiches des Speichergefäßes (30) vorgesehen ist, wobei mittels eines Steuermittels (61) ein Zufluss der Abwärme (50) an das Speichergefäß (30) gesteuert wird.

2. Verfahren nach Anspruch 1, **dadurch gekennzeichnet, dass** der Brennstoff (36) in dem Speichergefäß (30) mittel eines Adsorptionselements (35) gespeichert wird, wobei der Brennstoff (36) in dem Adsorptionselement (35) reversibel adsorbiert wird.

3. Verfahren nach Anspruch 2, **dadurch gekennzeichnet, dass** das Adsoptionselement (35) durch die Abwärmen (50) erwärmt wird und der Brennstoff (36) aus dem Adsorptionselement (35) reversibel desorbiert wird.

4. Brennstoffzellensystem (10), mit wenigstens einer Brennstoffzelle (20), einem Speichergefäß (30) und einer Batterie (40), wobei in dem Speichergefäß (30) ein Brennstoff (36) für die Brennstoffzelle (20) speicherbar ist, **dadurch gekennzeichnet, dass** ein Wärmemittel (60) vorgesehen ist, wobei das Wärmemittel (60) eine Abwärme (50) der Batterie (40) derart leitet, dass zumindest ein Bereich des Speichergefäßes (30) erwärmbar ist, wobei mittels eines Steuermittels (61) ein Zufluss der Abwärme (50) an das Speichergefäß (30) gesteuert wird.

5. Brennstoffzellensystem (10) nach Ansprüch 4, **dadurch gekennzeichnet, dass** in dem Speichergefäß (30) ein Adsorptionselement (35) angeordnet ist.

6. Brennstoffzellensystem (10) nach Ansprüche 4, **dadurch gekennzeichnet, dass** das Speichergefäß (30) ein Drucktank ist.

7. Brennstoffzellensystem (10) nach einem der Ansprüche 4 bis 6, **dadurch gekennzeichnet, dass** der erwärmte Bereich des Speichergefäßes (30) ein Ventilmittel (32) ist, wobei das Ventilmittel (32) einen Brennstofffluss (37) steuert.

8. Brennstoffzellensystem (10) nach einem der Ansprüche 4 bis 7, **dadurch gekennzeichnet, dass** die Batterie (40) innerhalb des Speichergefäßes (30) angeordnet ist.

9. Brennstoffzellensystem (10) nach einem der Ansprüche 4 bis 8, **dadurch gekennzeichnet, dass** das Wärmemittel (60) wenigstens eines der folgenden ist: ein Wärmeleitblech, eine Wärmestrahlung, eine Rohrelement oder ein flüssiger Wärmeträger, insbesondere dass das Wärmemittel (60) eine flüssige Wärmeträgersubstanz ist, die insbesondere auch bei Temperaturen unterhalb von 50°C flüssig vorliegt, wie insbesondere Silikonöle.

10. Brennstoffzellensystem (10) nach dem Anspruch 9, **dadurch gekennzeichnet, dass** die flüssige Wärmeträgersubstanz in einem Wärmeträgerkreislauf (62) fließt, wobei der Wärmeträgerkreislauf (62) in und/oder an dem zu erwärmenden Bereich des Speichergefäßes (30) angeordnet ist.

11. Brennstoffzellensystem (10) nach Anspruch 10, **dadurch gekennzeichnet, dass** zumindest ein Teil des Wärmeträgerkreislaufs (62) innerhalb des Adsorptionselement (35) verläuft.

12. Brennstoffzellensystem (10) nach einem der Ansprüche 10 oder 11, **dadurch gekennzeichnet, dass** das Speichergefäß (30) doppelwandig ist und zumindest ein Teil des Wärmeträgerkreislaufs (62) zwischen den Wänden des Speichergefäßes (30) angeordnet ist.

13. Brennstoffzellensystem (10) nach einem der Ansprüche 10 bis 12, **dadurch gekennzeichnet, dass** der Wärmeträgerkreislauf (62) eine Pumpe (63) und/oder einen Wärmetauscher (64) aufweist.

14. Brennstoffzellensystem (10) nach einem der vorherigen Ansprüche 4 bis 13 **dadurch gekennzeichnet, dass** das Brennstoffzellensystem (10) nach einem der Verfahren gemäß Anspruch 1 bis 3 betreibbar ist.

## Claims

1. Method for operating a fuel cell system (10), with at least one fuel cell (20), with a storage vessel (30) and with a battery (40), a fuel (36) for the fuel cell (20) being stored in the storage vessel (30), **characterized in that** waste heat (50) from the battery (40) is provided for heating at least one region of the storage vessel (30), a flow of the waste heat (50) to the storage vessel (30) being controlled by means of a control means (61).

2. Method according to Claim 1, **characterized in that** the fuel (36) is stored in the storage vessel (30) by means of an adsorption element (35), the fuel (36) being adsorbed reversibly in the adsorption element (35).

3. Method according to Claim 2, **characterized in that** the adsorption element (35) is heated by the waste heat (50) and the fuel (36) is desorbed out of the adsorption element (35) reversibly.

4. Fuel cell system (10), with at least one fuel cell (20), with a storage vessel (30) and with a battery (40), a fuel (36) for the fuel cell (20) being storable in the storage vessel (30), **characterized in that** a heat medium (60) is provided, the heat medium (60) conducting waste heat (50) from the battery (40) in such a way that at least one region of the storage vessel (30) is heatable, a flow of the waste heat (50) to the storage vessel (30) being controlled by a control means (61).

5. Fuel cell system (10) according to Claim 4, **characterized in that** an adsorption element (35) is arranged in the storage vessel (30).

6. Fuel cell system (10) according to Claim 4, **characterized in that** the storage vessel (30) is a pressure tank.

7. Fuel cell system (10) according to one of Claims 4 to 6, **characterized in that** the heated region of the storage vessel (30) is a valve means (32), the valve means (32) controlling a fuel flow (37).

8. Fuel cell system (10) according to one of Claims 4 to 7, **characterized in that** the battery (40) is arranged inside the storage vessel (30).

9. Fuel cell system (10) according to one of Claims 4 to 8, **characterized in that** the heat medium (60) is at least one of the following: a heat guide plate, heat radiation, a pipe element or a liquid heat transfer medium, in particular **in that** the heat medium (60) is a liquid heat transfer medium substance which, in particular, is in liquid form even at temperatures below 50°C, such as, in particular, silicone oils.

10. Fuel cell system (10) according to Claim 9, **characterized in that** the liquid heat transfer medium substance flows in a heat transfer medium circuit (62), the heat transfer medium circuit (62) being arranged in and/or on that region of the storage vessel (30) which is to be heated.

11. Fuel cell system (10) according to Claim 10, **characterized in that** at least part of the heat transfer medium circuit (62) runs inside the adsorption element (35).

12. Fuel cell system (10) according to either one of Claims 10 and 11, **characterized in that** the storage vessel (30) is double-walled and at least part of the heat transfer medium circuit (62) is arranged between the walls of the storage vessel (30).

13. Fuel cell system (10) according to one of Claims 10 to 12, **characterized in that** the heat transfer medium circuit (62) has a pump (63) and/or a heat exchanger (64).

14. Fuel cell system (10) according to one of the preceding Claims 4 to 13, **characterized in that** the fuel cell system (10) is operable by one of the methods according to Claims 1 to 3.

## Revendications

1. Procédé de conduite d'un système (10) de cellules à combustible qui présente au moins une cellule à combustible (20), un récipient de réserve (30) et une batterie (40),
un combustible (36) prévu pour la cellule à combustible (20) étant conservé dans le récipient de réserve (30),
**caractérisé en ce que**
la chaleur (50) dégagée par la batterie (40) est utilisée pour chauffer au moins une partie du récipient de réserve (30) et
**en ce que** l'apport au récipient de réserve (30) de la chaleur (50) dégagée est contrôlé au moyen d'un moyen de commande (61).

2. Procédé selon la revendication 1, **caractérisé en ce que** le combustible (36) est conservé dans le récipient de réserve (30) au moyen d'un élément adsorbant (35), le carburant (36) étant adsorbé de manière réversible dans l'élément adsorbant (35).

3. Procédé selon la revendication 2, **caractérisé en ce que** l'élément adsorbant (35) est chauffé par la chaleur (50) dégagée et **en ce que** le combustible (36) est désorbé de manière réversible de l'élément adsorbant (35).

4. Système (10) de cellules à combustible présentant au moins une cellule à combustible (20), un récipient de réserve (30) et une batterie (40), un combustible (36) prévu pour la cellule à combustible (20) pouvant être conservé dans le récipient de réserve (30), **caractérisé en ce que**
un moyen caloporteur (60) est prévu,
**en ce que** le moyen caloporteur (60) conduit la chaleur (50) dégagée par la batterie (40) de telle sorte qu'au moins une partie du récipient de réserve (30) puisse être chauffée et
**en ce que** l'apport au récipient de réserve (30) de la chaleur (50) dégagée est contrôlé au moyen d'un moyen de commande (61).

5. Système (10) de cellules à combustible selon la revendication 4, **caractérisé en ce qu'**un élément adsorbant (35) est disposé dans le récipient de réserve (30).

6. Système (10) de cellules à combustible selon la revendication 4, **caractérisé en ce que** le récipient de réserve (30) est une cuve sous pression.

7. Système (10) de cellules à combustible selon l'une des revendications 4 à 6, **caractérisé en ce que** la partie chauffée du récipient de réserve (30) est un moyen de soupape (32) et **en ce que** le moyen de soupape (32) contrôle l'écoulement (37) de combustible.

8. Système (10) de cellules à combustible selon l'une des revendications 4 à 7, **caractérisé en ce que** la batterie (40) est disposée à l'intérieur du récipient de réserve (30).

9. Système (10) de cellules à combustible selon l'une des revendications 4 à 8, **caractérisé en ce que** le moyen caloporteur (60) est au moins un des suivantes : une tôle thermoconductrice, un rayonnement thermique, un élément tubulaire ou un caloporteur liquide et en particulier **en ce que** le moyen caloporteur (60) est une substance caloporteuse liquide qui présente l'état liquide même à des températures inférieures à 50°C, notamment une huile de silicone.

10. Système (10) de cellules à combustible selon la revendication 9, **caractérisé en ce que** la substance caloporteuse liquide s'écoule dans un circuit caloporteur (62), le circuit caloporteur (62) étant disposé dans et/ou sur la partie à chauffer du récipient de réserve (30).

11. Système (10) de cellules à combustible selon la revendication 10, **caractérisé en ce qu'**au moins une partie du circuit caloporteur (62) s'étend à l'intérieur de l'élément adsorbant (35).

12. Système (10) de cellules à combustible selon l'une des revendications 10 et 11, **caractérisé en ce que** le récipient de réserve (30) est réalisé à double paroi et **en ce qu'**au moins une partie du circuit caloporteur (62) est disposée entre les parois du récipient de réserve (30).

13. Système (10) de cellules à combustible selon l'une des revendications 10 à 12, **caractérisé en ce que** le circuit caloporteur (62) présente une pompe (63) et/ou un échangeur de chaleur (64).

14. Système (10) de cellules à combustible selon l'une des revendications 4 à 13, **caractérisé en ce que** le système (10) de cellules à combustible peut être conduit en appliquant un procédé selon l'une des revendications 1 à 3.
